Europäisches Patentamt

European Patent Office

Office européen des brevets

(11) Numéro de publication: **0 213 997**
**B1**

(12) **FASCICULE DE BREVET EUROPEEN**

(45) Date de publication du fascicule du brevet:
05.09.90

(51) Int. Cl.⁵: **H01B 7/28**, G02B 6/44

(21) Numéro de dépôt: **86401606.8**

(22) Date de dépôt: **18.07.86**

(54) Composition de remplissage de câbles à fibres optiques.

(30) Priorité: **02.08.85 FR 8511870**

(43) Date de publication de la demande:
**11.03.87 Bulletin 87/11**

(45) Mention de la délivrance du brevet:
**05.09.90 Bulletin 90/36**

(84) Etats contractants désignés:
**BE CH DE FR GB LI LU NL SE**

(56) Documents cités:
**EP-A- 0 032 268**
**US-A- 3 875 323**

(73) Titulaire: **COMPAGNIE DE RAFFINAGE ET DE DISTRIBUTION TOTAL FRANCE: Société Anonyme dite, 5, rue Michel Ange, F-75781 Paris Cédex 16(FR)**

(72) Inventeur: **Mougin, Michel, 10, rue de la Reine Henriette, F-92700 Colombes(FR)**
Inventeur: **Cinquanta, Alain, 16, Square des Platanes, F-78870 Bailly(FR)**

(74) Mandataire: **Jolly, Jean-Pierre et al, Cabinet BROT et JOLLY 83, rue d'Amsterdam, F-75008 Paris(FR)**

ACTORUM AG

# EP 0 213 997 B1

## Description

La présente invention concerne des compositions de remplissage de câbles, contenant au moins une fibre optique. Elle concerne plus particulièrement des compositions de remplissage de câbles à fibres optiques, qui sont étanches à l'eau et suffisamment souples entre -50°C et +80°C pour ne pas altérer, de façon notable, les signaux traversant les fibres optiques et qui sont injectables à une température inférieure à 60°C.

Les compositions conformes à l'invention étant particulièrement adaptées au remplissage de câbles à fibres optiques, c'est à cette application particulière que l'on se référera dans la suite de la présente description. Il est néanmoins possible d'utiliser ces compositions pour le remplissage de câbles contenant des conducteurs électriques ou d'autres supports de transmission de signaux sensibles à l'humidité et aux contraintes mécaniques, en particulier aux très basses températures, et l'on ne sortirait pas du cadre de l'invention en utilisant les compositions qui seront décrites ci-après pour de telles applications.

Il est connu qui les signaux optiques acheminés par l'intermédiaire de fibres optiques seules, à l'air libre subissent une atténuation.

L'affaiblissement d'une partie des signaux se traduit, pour l'homme de l'art, par des pertes optiques, mesurées en décibels par kilomètre parcouru (dB/km). En outre, on sait que les fibres optiques sont sensibles à l'humidité et aux contraintes mécaniques du type microcourbures, tensions, compressions, qui ont pour effet d'accroître les pertes optiques au kilomètre de ces fibres. Pour éviter la pénétration d'humidité et d'eau, les câbliers ont proposé, comme dans le domaine des conducteurs électriques, d'employer des compositions de bourrage de câbles qui protègent de l'humidité la fibre optique placée dans un câble, tout en lui assurant une grande liberté.

Ces compositions de remplissage pour câbles doivent présenter un certain nombre de caractéristiques et notamment être imperméables à l'eau et être souples pour éviter toute contrainte mécanique sur la ou les fibre(s) optique(s), au cours de la manipulation du câble, et ce quelle que soit la température environnante, entre −40°C et +75°C. Par ailleurs, les compositions ne doivent pas ressueur ou couler, en particulier au niveau des raccordements des câbles entre-eux, pour faciliter leur manipulation. Ces compositions doivent pouvoir être injectées à une température inférieure à 70°C, pour ne pas endommager la fibre optique, et, si possible, à température ambiante.

Depuis quelques années, les compositions de remplissage de câbles à fibres optiques, mises au point pour être utilisées entre −40°C et +70°C et avoir les propriétés définies ci-dessus, sont des gels constitués d'un mélange d'huile minérale, naphténique ou paraffinique, satisfaisant aux normes ASTM D 103 et D 104 A et B, d'un copolymère par bloc tel que le styrène-éthylène-butylène-styrène et, éventuellement, d'une résine, ou encore d'un mélange d'huile blanche et d'un thermoplastifiant.

L'expérience montre que ces compositions durcissent aux basses températures et, notamment, vers −40°C, et qu'elles induisent de ce fait des contraintes mécaniques sur les fibres, avec pour conséquence des pertes optiques supérieures aux limites tolérables de pertes optiques, par exemple celle définie par les P.T.T. français à −30°C, qui est actuellement de 0,5 dB/km. De plus, ces compositions ne s'appliquent qu'à chaud, à une température égale ou supérieure à 80°C, ce qui est un inconvénient majeur dans la fabrication du câble lui-même.

En outre, ces compositions ne conviennent pas à toutes les structures de câbles.

On connaît en outre, par US-A 3 875 323, des compositions de remplissage pour câbles de téléphone comprenant un mélange de petrolatum et de silice colloïdale.

La présente invention vise à proposer des compositions de remplissage qui n'induisent sur les fibres optiques que des pertes optiques très faibles, acceptables dans le bilan optique d'une liaison utilisant un câble de fibres optiques rempli par ces compositions entre −50°C et +80°C, qui soient injectables à froid, c'est-à-dire à température ambiante ou à une température inférieure à 60°C, et qui de plus soient appropriées à toutes les structures de câbles.

A cet effet, l'invention a pour objet une composition de remplissage d'un câble contenant au moins une fibre optique, utilisable entre −50°C et +80°C, cette composition étant caractérisée en ce qu'elle est injectable à une température inférieure à 60°C, en ce qu'elle est constituée de:

— 80 à 95% en poids d'au moins une base lubrifiante dont la viscosité, déterminée selon la norme AFNOR NFT 60−100, est inférieure à 6000 mPa.s à −40°C et

— 20 à 5% en poids d'un produit gélifiant appartenant au groupe constitué par les savons hydrophobes d'acides gras supérieurs saturés, hydroxysubstitués, seuls ou en mélange avec des savons d'acides gras supérieurs saturés, liés à des métaux alcalins et/ou alcalino-terreux, par la bentone, et par la silice colloïdale,

et en ce que son point de goutte, déterminé par application de la norme AFNFOR NFT 60−102, est supérieur à 120°C et sa pénétrabilité au cône, mesurée selon la norme AFNOR NFT 60−132, est comprise entre 250 et 400 dixièmes de millimètre à +25°C et entre 150 et 250 dixièmes de millimètre à −40°C.

Pour pouvoir atteindre une viscosité inférieure à 6000 mPa.s à −40°C, les bases lubrifiantes entrant dans les compositions de bourrage de l'invention sont obtenues à partir d'une ou deux bases synthétiques désignées respectivement, dans la suite de la présente description, comme étant les bases X et Y, la base synthétique X étant constituée d'au moins une polyoléfine, dont le point d'écoulement, déterminé suivant la norme AFNOR NFT 60–105, est inférieur ou égal à –30°C, dont le point éclair, obtenu par application de la norme AFNOR NFT 60–118, est supérieur ou égal à 120°C et dont la viscosité, mesurée par application de la norme AFNOR NFT 60–100, est inférieure à 17 mPa.s à 100°C, tandis que la base synthétique Y est constituée par au moins un alkylbenzène, mono ou polyalkylé, de poids moléculaire compris entre 200 et 500, et dont le point d'écoulement mesuré suivant l'une des normes AFNOR NFT 60–105 et ASTM D97 est compris entre –60°C et –30°C.

Parmi les savons gélifiants utilisés pour réaliser une composition selon l'invention, les hydroxystéarates de métaux alcalines ou alcalino-terreux sont préférés, et en particulier le 12 hydroxystéarate de calcium.

Les compositions de remplissage pour câbles à fibres optiques de l'invention ont pour avantage de réduire les pertes optiques de la fibre, par rappor à l'art antérieur, et ce quelles que soient la nature des fibres, la longueur d'onde utilisée et la structure du câble, même à –40°C. Elles peuvent en outre être manipulées à température ambiante, ce qui rend plus aisée la fabrication des câbles.

Parmi les différentes compositions de remplissage entrant dans le cadre de l'invention, on mentionnera quatre compositions préférées, correspondant à des combinaisons de bases synthétiques et d'agent gélifiant favorables à l'obtention des buts recherchés.

Une première composition préférée de l'invention comprend:

– 86 à 92% en poids d'une base lubrifiante constituée par:
1. 50 à 91% en poids d'une base X, de point d'écoulement inférieur à –30°C, et de viscosité à 100°C inférieure ou égale à 5 mPa.s,
2. et 50 à 9% en poids d'une base Y, de poids moléculaire compris entre 300 et 400 pout un point d'écoulement compris entre –60°C et –30°C,
– et 14 à 8% en poids d'au moins un agent gélifiant choisi parmi les savons hydrophobes d'acides gras supérieurs saturés, hydroxysubstitués, seuls ou en mélange avec au moins un des savons d'acides gras supérieurs saturés de métaux alcalines ou alcalino-terreux,

cette première composition possédant en outre un point de goutte supérieur à 135°C et une pénétrabilité au cône comprise entre 290 et 340 dixièmes de millimètre à 25°C et comprise entre 150 et 250 dixièmes de millimètre à –40°C.

Une deuxième composition préférée de l'invention comprend:

– 86 à 92% en poids de base lubrifiante constituée par au moins une base Y de poids moléculaire compris entre 250 et 400 et de point d'écoulement compris entre –60°C et –30°C, et
– 14 à 8% en poids d'au moins un agent gélifiant choisi parmi les savons hydrophobes d'acides gras supérieurs saturés, hydroxysubstitués, seuls ou en mélange avec des savons d'acides gras supérieurs substitués de métaux alcaline ou alcalino-terreux,

cette composition possédant en outre un point de goutte compris, de préférence, entre 140 et 145°C et une pénétrabilité au cône comprise, de préférence, entre 290 et 340 dixième de millimètre à 25°C et comprise, de préférence, entre 150 et 200 dixièmes de millimètre à –40°C.

Une troisième composition préférée de l'invention comprend:

– 85 à 95% en poids d'une base lubrifiante constituée par 50 à 90% d'une base X, de point d'écoulement inférieur à –30°C et de viscosité à 100°C inférieure ou égale à 5 mPa.s, et par 50 à 10% d'une base Y de poids moléculaire compris entre 250 et 450 et de point de congélation compris entre –60 °C et –30°C, et
– 15 à 5% en poids d'au moins un agent gélifiant qui peut être choisi dans le groupe constitué par la bentone et la silice colloïdale.

Il est clair que certaines variantes peuvent également constituer une composition de l'invention, en particulier la silice colloïdale en mélange dans une base synthétique.

Aussi, une quatrième composition préférée de l'invention comprend-elle:

– 85 à 95% en poids de polyoléfine ou base X de point d'écoulement inférieur à –30°C, de viscosité inférieure à 5 mPa.s à 100°C et inférieure à 6000 mPa.s à –40°C, et
– 15 à 5% en poids de silice colloïdale comme agent gélifiant.

Les exemples ci-après sont destinés à mieux illustrer la présente invention, mais sans pour autant en limiter la portée.

EXEMPLE 1

On a préparé deux compositions de remplissage A et B conformes à l'invention, qui ont été utilisées pour remplir trois câbles à fibres optiques de structure cylindrique à jonc rainuré, les fibres optiques

3

étant disposées dans les encoches ménagées à la périphérie d'un jonc en polyéthylène dont le diamètre, dans les trois câbles, est respectivement égal à 4, 6 ou 8 mm, les fibres optiques étant noyées dans l'une des deux compositions A et B à température ambiante.

Ces fibres optiques sont du type 50 - 125 - 250 multimodale et ont été utilisées à une longueur d'onde de 0,85 µm.

La constitution des compostions A et B ainsi que les valeurs de la viscosité de la base lubrifiante obtenue à -40°C, la pénétrabilité au cône des compositions et leur point de goutte sont rassemblées dans le Tableau 1 ci-après.

TABLEAU 1

|  |  | Composition A (parties en poids) | Composition B (parties en poids) |
|---|---|---|---|
| Base Lubrifiante | X[1] | 44 | 80 |
|  | Y[2] | 44 | 8 |
| Gélifiant | 12 hydroxystéarate de calcium | 12 | 12 |
| Viscosité de la base lubrifiante en mPa.s[1] à –40°C |  | 5300 | 3200 |
| Pénétrabilité en 1/10 de mm de la composition: |  |  |  |
| * à 25°C |  | 310 | 330 |
| * à –40°C |  | 180 | 210 |
| Point de goutte en °C de la composition |  | 145 | 145 |

(1) X: polyoléfine de point d'écoulement inférieur à –50° et de viscosité à 100°C égale à 3 mPa.s.
(2) Y: dialkylbenzène de masse moléculaire moyenne égale à 360 et ayant un point d'écoulement de –43°C.

Les compositions A et B ont été préparées par les méthodes de fabrication classiques pratiquées par les fabricants de graisse et répertoriées dans le manuel "Manufacture and application of lubricating greases" par C.J. BONER, édité par Robert Krieger, publishing Compagny Incorporated.

Des tests d'atténuation ou de pertes optiques ont été pratiqués sur les deux câbles remplis respectivement des compositions A et B, ainsi que sur un câble identique aux deux premiers, dans lequel les fibres sont à l'air libre, afin de comparer l'atténuation apportée par les compositions. Ces tests consistent à enrouler chaque câble sur un touret de 2 m de diamètre de fût, de façon à ce que le câble soit parfaitement libre, puis à placer le touret dans une chambre thermostatée, dans laquelle il est soumis à deux cycles thermiques entre -40°C et +65°C.

Chaque cycle thermique consiste à observer quatre paliers de température dans la chambre thermostatée, successivement à +20°C, +65°C, -40°C et +20°C, chaque palier durant 60 minutes, la température augmentant ou diminuant entre chaque palier à la vitesse de 0,2°C mn⁻¹. Pendant le deuxième cycle, on mesure en continu les atténuations ou pertes optiques de chaque fibre optique contenue dans le câble, en appliquant la méthode décrite dans la norme AFNOR NFC 93 - 850.

Les atténuations de signaux étant quasi nulles aux températures supérieures ou égales à 0°C, le tableau 2 ci-après regroupe les atténuations mesurées aux basses températures.

TABLEAU 2

| Perte optique en dB/km |  |  |  |  |  |  |
|---|---|---|---|---|---|---|
| Nature de l'essai | (1) |  | (1) |  | (2) |  |
| Diamètre du jonc en mm | 4 |  | 6 |  | 8 |  |
| Câble testé Température | Avec Composition B | Sans Composition | Avec Composition A | Sans Composition | Avec Composition B | Sans Composition |
| –10°C | ≤ 0,1 | ≤ 0,1 | ≤ 0,1 | ≤ 0,1 | 0,3 | ≤ 0,2 |
| –20°C | ≤ 0,1 | ≤ 0,1 | ≤ 0,4 | ≤ 0,1 | 0,2–0,5 | ≤ 0,2 |
| –30°C | 0,2 | ≤ 0,1 | 0,8 | ≤ 0,1 | 0,5–0,8 | ≤ 0,2 |
| –40°C | – | – | – | – | 0,8–1,0 | ≤ 0,2 |

(1) Longueur du câble testé: 500 m. Le troisième palier de température est de –30°C et non –40°C.
(2) Longueur du câble testé: 2000 m.

Dans ce tableau 2, les atténuations mesurées sur les câbles remplis par une des compositions A et B correspondent à l'effet conjugué des fibres et de la composition de remplissage. Les atténuations propres aux compositions de remplissage sont donc inférieures aux valeurs indiquées. Aux basses températures, ces atténuations dues à la composition sont faibles au regard des atténuations de la fibre elle-même, quelle que soit la composition A ou B de remplissage du câble.

EXEMPLE 2

Dans cet exemple, on a testé deux câbles longs de 500 m, contenant chacun un jonc de type particulier, en ce qu'il comprend sur toute sa longueur une rainure en forme de U.

Trois fibres optiques ont été disposées dans la rainure du jonc de chaque câble. Dans le premier câble, elles ont été laissées à l'air libre (câble dit "sec", sans composition) ; dans le second câble, les fibres ont été noyées dans la composition A (câble dit "rempli").

Le câble rempli et le câble sec ont été soumis aux mêmes tests que ceux décrits dans l'Exemple 1, le palier de température le plus bas étant de -30°C.

Aux températures supérieures à -10°C, l'atténuation du signal est la même pour les deux câbles, en ce qu'elle n'est pas décelable.

A -30°C, l'atténuation du signal dans le câble sec est comprise entre 0,3 et 0,5 dB/km, tandis que celle du câble rempli par la composition A est comprise entre 0,4 et 0,7 dB/km ; la contribution de la composition A à l'atténuation du signal peut donc être évaluée à 0,1 -0,2 dB/km.

## Revendications

1. Composition de remplissage d'un câble contenant au moins une fibre optique, utilisable entre –50°C et +80°C, cette composition étant caractérisée en ce qu'elle est injectable à une température inférieure à 60°C, en ce qu'elle est constituée de:

i) 80 à 95% en poids d'au moins une base lubrifiante de viscosité inférieure à 6000 mPa.s à –40°C, et

ii) 20 à 5% en poids d'un produit gélifiant appartenant au groupe constitué par les savons hydrophobes d'acides gras supérieurs saturés, hydroxysubstitués, seuls ou en mélange avec des savons d'acides gras supérieurs saturés de métaux alcalins et alcalino-terreux, par la betone et par la silice colloïdale,

et en ce que son point de goutte est supérieur à 120°C, et sa pénétrabilité au cône est comprise entre 250 et 400 dixièmes de millimètre à +25°C, et entre 150 et 250 dixièmes de millimètres à –40°C.

2. Composition selon la revendication 1, caractérisée en ce que la base lubrifiante est constituée d'une ou deux bases synthétiques, X et Y, la base X comprenant au moins une polyoléfine dont le point d'écoulement est inférieur ou égal à –30°C, le point éclair est égal à 120°C et la viscosité à 100°C est inférieure à 17 mPa.s, et la base Y comprenant au moins un alkyl-benzène mono ou polyalkylé de poids moléculaire compris entre 200 et 500 et de point de congélation compris entre –60°C et –30°C.

3. Composition selon la revendication 2, caractérisé en ce qu'elle comprend 86 à 92% d'une base lubrifiante constituée par:

i) 50 à 91% en poids d'au moins une base X de viscosité à 100°C inférieure ou également à 5 mPa.s, et

ii) 50 à 9% en poids d'au moins une base Y de poids moléculaire compris entre 300 et 400, et par 14 à 8% en poids d'un agent gélifiant choisi parmi les savons hydrophobes d'acides gras supérieurs saturés hydroxysubstitués seuls ou en mélange avec au moins un savon d'acide gras supérieur saturé de métaux alcalin ou alcalino-terreux, et en ce qu'elle a un point de goutte supérieur à 135°C et une pénétrabilité au cône comprise entre 290 et 340 dixièmes de millimètre à 25°C et comprise entre 150 et 250 dixièmes de millimètre à –40°C.

4. Composition selon la revendication 2, caractérisée en ce qu'elle comprend 86 à 92% en poids d'une base lubrifiante constituée par au moins une base Y de poids moléculaire compris entre 250 et 400, et 14 à 8% en poids d'un agent gélifiant choisi parmi les savons hydrophobes d'acides gras supérieurs substitués hydroxysubstitués seuls ou en mélange avec des savons d'acide gras supérieurs substitués de métaux alcalins ou alcalino-terreux, et en ce qu'elle a un point de goutte compris entre 140°C et 145°C et une pénétrabilité au cône compris entre 290 et 340 dixièmes de millimètre à 25°C et compris entre 150 et 200 dixièmes de millimètre à –40°C.

5. Composition selon l'une des revendications 1 à 4, caractérisée en ce que l'agent gélifiant est un hydroxystéarate de métaux alcalins ou alcalino-terreux et, de préférence, le 12 hydroxystéarate de calcium.

6. Composition selon la revendication 2, caractérisée en ce qu'elle comprend 85 à 95% en poids d'une base lubrifiante constituée par 50 à 90% en poids d'au moins une base de viscosité à 100°C inférieure ou égale à 5 mPa.s et par 50 à 10% en poids d'au moins une base Y de poids moléculaire compris entre 250 et 450, et de point de congélation compris entre –60°C et –30°C, et 15 à 5% d'au moins un agent gélifiant choisi dans le groupe constitué par la bentone et la silice colloïdale.

7. Composition selon la revendication 2, caractérisée en ce qu'elle comprend:

– 85 à 95% en poids de polyoléfine ou base X de point d'écoulement inférieur à –30°C, de viscosité inférieure à 5 mPa.s à 100°C et inférieure à 6000 mPa.s à –40°C, et

– 15 à 5% en poids de silice colloïdale comme agent gélifiant.

## Claims

1. A composition for filling a cable, which contains at least one optical fibre and which can be used between –50°C and +80°C, said composition being characterised in that it can be injected at a temperature below 60°C, and in that it is composed of:

i) 80 to 95% by weight of at least one lubricant base of a viscosity lower than 6000 mPa.s at –40°C, and

ii) 20 to 5% by weight of a gelling product belonging to the group comprising the hydroxysubstituted hydrophobic soaps of saturated higher fatty acids, alone or mixed with soaps of saturated higher fatty acids of alkaline and alkaline-earth metals, Bentone and colloidal silica,

and in that its dropping point is higher than 120°C and its cone penetrability is between 250 and 400 tenths of a millimetre at +25°C and between 150 and 250 tenths of a millimetre at –40°C.

2. A composition according to claim 1, characterised in that the lubricant base is composed of one or two synthetic bases, X and Y, the base X comprising at least one polyolefin, the flow temperature of which is below or equal to –30°C, the flask point is equal to 120°C and the viscosity at 100°C is lower than 17 mPa.s, and the base Y comprising at least one mono or polyalkylated alkyl-benzene of a molecular weight of between 200 and 500 and a setting point of between –60°C and –30°C.

3. A composition according to claim 2, characterised in that it comprises 86 to 92% of a lubricant base compsed of:

i) 50 to 91% by weight of at least one base X of a viscosity at 100°C lower than or equal to 5 mPa.s, and

ii) 50 to 9% by weight of at least one base Y of a molecular weight of between 300 and 400, and 14 to 8% by weight of a gelling agent chosen from the hydroxysubstituted hydrophobic soaps of saturated higher fatty acids, alone or mixed with at least one soap of a saturated higher fatty acid of alkaline or alkaline-earth metals, and in that it has a dropping point higher than 135°C and a cone penetrability of between 290 and 340 tenths of a millimetre at 25°C and between 150 and 250 tenths of a millimetre at –40°C.

4. A composition according to claim 2, characterised in that it comprises 86 to 92% by weight of a lubricant base composed of at least one base Y of a molecular weight of between 250 and 400, and 14 to 8% by weight of a gelling agent chosen from the hydroxysubstituted hydrophobic soaps of substituted higher fatty acids, alone or mixed with soaps of substituted higher fatty acids of alkaline or alkaline-earth metals, and in that it has a dropping point of between 140°C and 145°C and a cone penetrability of between 290 and 340 tenths of a millimetre at 25°C and between 150 and 250 tenths of a millimetre at –40°C.

5. A composition according to any one of claims 1 to 4, characterised in that the gelling agent is a hydroxystearate of alkaline or alkaline-earth metals and, preferably, calcium 12 hydroxystearate.

6. A composition according to claim 2, characterised in that it comprises 85 to 95% by weight of a lubricant base composed of 50 to 90% by weight of at least one base of a viscosity at 100°C lower than or equal to 5 mPa.s, and 50 to 10% by weight of at least one base Y of a molecular weight of between 250 and 450, and with a setting point of between –60°C and –30°C, and 15 to 5% of at least one gelling agent chosen from the group comprising Bentone and colloidal silica.

7. A composition according to claim 2, characterised in that it comprises:

– 85 to 95% by weight of polyolefin or base X with a flow temperature below –30°C, of a viscosity lower than 5 mPa.s at 100°C and lower than 6000 mPa.s at –40°C, and

– 15 to 5% by weight of colloidal silica as gelling agent.

## Patentansprüche

1. Füllmasse für ein Kabel mit mindestens einer optischen Faser zur Verwendung bei Temperaturen zwischen –50°C und +80°C, dadurch gekennzeichnet, daß sie bei einer Temperatur tiefer als +60°C spritzfähig ist, die folgende Zusammensetzung hat:

i) 80 bis 95 Gewichtsprozent Schmierstoffbasis mit einer Viskosität geringer als 6000 mPa.s bei einer Temperatur von –40°C;

ii) 20 bis 5 Gewichtsprozent Geliermittel bestehend aus mindestens einer der hydrophoben Seifen der hydroxysubstituierten gesättigten höheren Fettsäuren oder aus einer Mischung mindestens einer solchen Seife mit mindestens einer der Alkalimetall- und Erdalkalimetallseifen der gesättigten höheren Fettsäuren und/oder aus Benton und/oder aus kolloidaler Kieselerde;

und einen Tropfpunkt höher als +120°C sowie eine Konuspenetration zwischen 250 und 400 Zehntelmillimetern bei einer Temperatur von +25°C sowie zwischen 150 und 250 Zehntelmillimetern bei einer Temperatur von –40°C aufweist.

2. Füllmasse nach Anspruch 1, dadurch gekennzeichnet, daß die Schmierstoffbasis aus einer synthetischen Basis X und/oder einer synthetischen Basis Y besteht, wobei die Basis X ihrerseits aus mindestens einem Polyolefin mit einem Fließpunkt von –30°C oder tiefer, einem Flammpunkt von +120°C sowie einer Viskosität geringer als 17 mPa.s bei einer Temperatur von +100°C besteht und

die Basis Y ihrerseits aus mindestens einem der Mono- und Polyalkylbenzole mit einem Molekulargewicht zwischen 200 und 500 sowie einem Stockpunkt zwischen –60°C und –30°C besteht.

3. Füllmasse nach Anspruch 2, dadurch gekennzeichnet, daß sie die folgende Zusammensetzung:
86 bis 92 Gewichtsprozent Schmierstoffbasis bestehend aus
i) 50 bis 91 Gewichtsprozent Basis X mit einer Viskosität von 5 mPa.s oder geringer bei einer Temperatur von +100°C sowie
ii) 50 bis 9 Gewichtsprozent Basis Y mit einem Molekulargewicht zwischen 300 und 400;
14 bis 8 Gewichtsprozent Geliermittel bestehend aus mindestens einer der hydrophoben Seifen der hydroxysubstituierten gesättigten höheren Fettsäuren oder aus einer Mischung mindestens einer solchen Seife mit mindestens einer der Alkalimetall- und Erdalkalimetallseifen der gesättigten höheren Fettsäuren;
und einen Tropfpunkt höher als +135°C sowie eine Konuspenetration zwischen 290 und 340 Zehntelmillimetern bei einer Temperatur von +25°C sowie zwischen 150 und 250 Zehntelmillimetern bei einer Temperatur von –40°C aufweist.

4. Füllmasse nach Anspruch 2, dadurch gekennzeichnet, daß sie die folgende Zusammensetzung:
86 bis 92 Gewichtsprozent Schmierstoffbasis bestehend aus Basis Y mit einem Molekulargewicht zwischen 250 und 400;
14 bis 8 Gewichtsprozent Geliermittel bestehend aus mindestens einer der hydrophoben Seifen der hydroxysubstituierten gesättigten höheren Fettsäuren oder aus einer Mischung mindestens einer solchen Seife mit mindestens einer der Alkalimetall- und Erdalkalimetallseifen der gesättigten höheren Fettsäuren;
und einem Tropfpunkt zwischen +140°C und +145°C sowie eine Konuspenetration zwischen 290 und 340 Zehntelmillimetern bei einer Temperatur von +25°C sowie zwischen 150 und 250 Zehntelmillimetern bei einer Temperatur von –40°C aufweist.

5. Füllmasse nach einem der Ansprüche 1 bis 4, dadurch gekennzeichnet, daß als Geliermittel ein Alkalimetall- oder Erdalkalimetallhydroxystearat, vorzugsweise Calcium-12-hydroxy-stearat, vorgesehen ist.

6. Füllmasse nach Anspruch 2, gekennzeichnet durch die folgende Zusammensetzung:
85 bis 95 Gewichtsprozent Schmierstoffbasis bestehend aus
50 bis 90 Gewichtsprozent Basis X mit einer Viskosität von 5 mPa.s oder geringer bei einer Temperatur von +100°C sowie
50 bis 10 Gewichtsprozent Basis Y mit einem Molekulargewicht zwischen 250 und 450 sowie einem Stockpunkt zwischen –60°C und –30°C;
15 bis 5 Gewichtsprozent Geliermittel bestehend aus Benton und/oder kolloidaler Kieselerde.

7. Füllmasse nach Anspruch 2, gekennzeichnet durch die folgende Zusammensetzung:
85 bis 95 Gewichtsprozent Schmierstoffbasis bestehend aus Basis X mit einem Fließpunkt tiefer als –30°C sowie einer Viskosität geringer als 5 mPa.s bei einer Temperatur von +100°C und geringer als 6000 mPa.s bei einer Temperatur von –40°C;
15 bis 5 Gewichtsprozent Geliermittel bestehend aus kolloidaler Kieselerde.